(19) Europäisches Patentamt / European Patent Office / Office européen des brevets

(11) **EP 4 395 334 A1**

(12) **EUROPEAN PATENT APPLICATION**
published in accordance with Art. 153(4) EPC

(43) Date of publication:
**03.07.2024 Bulletin 2024/27**

(51) International Patent Classification (IPC):
*H04N 21/422* (2011.01)    *H04N 21/4363* (2011.01)
*H04N 21/436* (2011.01)

(21) Application number: **22867617.7**

(22) Date of filing: **26.08.2022**

(52) Cooperative Patent Classification (CPC):
**H04N 21/422; H04N 21/436; H04N 21/4363**

(86) International application number:
**PCT/KR2022/012817**

(87) International publication number:
**WO 2023/038348 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.09.2021 KR 20210119849**

(71) Applicant: **Samsung Electronics Co., Ltd.
Suwon-si, Gyeonggi-do 16677 (KR)**

(72) Inventors:
• **PARK, Junhyung
Suwon-si, Gyeonggi-do 16677 (KR)**
• **FIJALKOWSKI, Adam
00-844 Plac Europejski 1 (PL)**
• **SETNIEWSKI, Dominik
00-844 Plac Europejski 1 (PL)**
• **LIM, Chaigil
Suwon-si, Gyeonggi-do 16677 (KR)**
• **JEON, Jinwoo
Suwon-si, Gyeonggi-do 16677 (KR)**
• **PARK, Nojoon
Suwon-si, Gyeonggi-do 16677 (KR)**
• **SONG, Gajin
Suwon-si, Gyeonggi-do 16677 (KR)**
• **LEE, Sunkey
Suwon-si, Gyeonggi-do 16677 (KR)**

(74) Representative: **Gulde & Partner
Patent- und Rechtsanwaltskanzlei mbB
Wallstraße 58/59
10179 Berlin (DE)**

(54) **ELECTRONIC DEVICE WHICH PROVIDES USER EXPERIENCE FOR CONTROLLING AT LEAST ONE ULTRA-WIDEBAND DEVICE, AND CONTROL METHOD THEREFOR**

(57)    Disclosed are an electronic device that provides user experience for controlling at least one UWB device, and a control method therefor. The electronic device according to an embodiment of the present document comprises: at least one antenna, a touch screen display; and at least one processor operatively connected to the at least one antenna and the touch screen display, wherein the at least one processor may: receive an ultra-wideband (UWB) signal from an external electronic device through the at least one antenna; in response to reception of the UWB signal, calculate an orientation angle of the electronic device with respect to the external electronic device, a distance between the external electronic device and the electronic device, and an orientation time; when each of the calculated orientation angle, the distance, and the orientation time satisfies a first predesignated criterion, be configured to display a user interface corresponding to the external electronic device; and when any one of the calculated orientation angle, the distance, and the orientation time does not satisfy the first criterion, be configured to display, through the touch screen display, a user interface corresponding to the external electronic device on the basis that at least one of the other remaining ones satisfies a second criterion that is different from the first criterion.

EP 4 395 334 A1

START

RECEIVE UWB SIGNAL FROM EXTERNAL
ELECTRONIC DEVICE THROUGH AT LEAST ONE ANTENNA ~210

COMPUTE ORIENTATION ANGLE OF ELECTRONIC DEVICE
WITH RESPECT TO EXTERNAL ELECTRONIC DEVICE,
DISTANCE BETWEEN EXTERNAL ELECTRONIC
DEVICE AND ELECTRONIC DEVICE, AND ORIENTATION
TIME IN RESPONSE TO RECEPTION OF UWB SIGNAL ~220

DISPLAY USER INTERFACE CORRESPONDING TO EXTERNAL
ELECTRONIC DEVICE WHEN EACH OF COMPUTED
ORIENTATION ANGLE, DISTANCE, AND ORIENTATION
TIME MEETS PREDESIGNATED FIRST CRITERION ~230

END

# FIG. 2

## Description

[Technical Field]

Various embodiments of the disclosure relate to an electronic device that provides a user experience for controlling at least one UWB device and a control method thereof.

[Background Art]

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through electronic devices are evolving more and more.

[Detailed Description of the Invention]

[Technical Problem]

Recently being developed are technologies for providing a user experience for controlling a device supporting UWB communication function (which may be, e.g., a TV, and may be simply referred to hereinafter as a "UWB device" for convenience of description in the disclosure) using ultra-wideband (UWB) technology. These UWB technologies consider "directivity" and "immediacy" as top priorities. However, such "directivity" and "immediacy" may frequently fail to accurately reflect the user's intent when controlling a UWB device. For example, such an occasion may occur where the electronic device determines that the user of the electronic device (e.g., smartphone) faces the UWB device and provides various user interfaces related to the UWB device through the electronic device when the user merely passes by the UWB device. Further, when the user changes the orientation angle to control the UWB device (e.g., horizontally changes by 60 degrees from the front with respect to the UWB device) while the user faces the UWB device, the electronic device may determine that the user does not face the UWB device not to provide various user interfaces related to the UWB device through the electronic device any longer.

According to an embodiment of the disclosure, there may be provided an electronic device that provides a user experience that may match the intent of the user of the electronic device by providing a user interface for controlling a UWB device based on the orientation angle for the UWB device, the distance between the electronic device and the UWB device, and/or the time when it faces the UWB device.

According to an embodiment of the disclosure, there may be provided an electronic device that provides a user experience that may match the intent of the user of the electronic device by allowing a command for activating a UWB device to be transmitted to the UWB device depending on whether the user is present in a specific room and/or whether a specific application is running on the electronic device to thereby activate the UWB device in advance.

[Technical Solution]

An electronic device according to an embodiment of the disclosure may comprise at least one antenna, a touchscreen display, and at least one processor operatively connected to the at least one antenna and the touchscreen display. The at least one processor may be configured to receive an ultra-wideband (UWB) signal from an external electronic device through the at least one antenna, compute an orientation angle of the electronic device with respect to the external electronic device, a distance between the external electronic device and the electronic device, and an orientation time, in response to the reception of the UWB signal, when each of the computed orientation angle, the distance, and the orientation time meets a predesignated first criterion, display a user interface corresponding to the external electronic device, and when any one of the computed orientation angle, the distance, and the orientation time does not meet the first criterion, display the user interface corresponding to the external electronic device through the touchscreen display based on at least one of the rest meeting a second criterion different from the first criterion.

An electronic device according to an embodiment of the disclosure may comprise at least one antenna and at least one processor operatively connected to the at least one antenna. The at least one processor may be configured to determine whether the electronic device is located in a specific room, based on receiving a Bluetooth low energy (BLE) signal or a UWB signal transmitted from an external electronic device through the at least one antenna, determine whether a first-type UWB device is present in the specific room, based on determining that the electronic device is located in the specific room, and transmit a command for enabling the first-type external electronic device to output the UWB signal to a second-type external electronic device, based on determining that the first-type UWB device is present in the specific room.

A method for controlling an electronic device according to an embodiment of the disclosure may comprise receiving an ultra-wideband (UWB) signal from an external electronic device through at least one antenna of the electronic device, computing an orientation angle of the electronic device with respect to the external electronic device, a distance between the external electronic device and the electronic device, and an orientation time, in response to the reception of the UWB signal, when each of the computed orientation angle, the distance, and the orientation time meets a predesignated first criterion, displaying a user interface corresponding to the external electronic device, and when any one of the computed orientation angle, the distance, and the orientation time does not meet the first criterion, displaying the user interface corresponding to the external electronic device based on at least one of the rest meeting a second criterion different from the first criterion.

The method may comprise, when any one of the computed orientation angle, the distance, and the orientation time does not meet the first criterion, displaying the user interface corresponding to the external electronic device based on at least one of the rest meeting a second criterion different from the first criterion.

[Advantageous Effects]

According to an embodiment of the disclosure, it is possible to provide a user experience that may match the intent of the user of the electronic device by providing a user interface for controlling a UWB device based on the orientation angle for the UWB device, the distance between the electronic device and the UWB device, and/or the time when it faces the UWB device.

According to an embodiment of the disclosure, it is possible to provide a user experience that may match the intent of the user of the electronic device by allowing a command for activating a UWB device to be transmitted to the UWB device depending on whether the user is present in a specific room and/or whether a specific application is running on the electronic device to thereby activate the UWB device in advance.

The effects set forth herein are not limited thereto, and it is apparent to one of ordinary skill in the art that various effects may be disclosed herein.

[Brief Description of Drawings]

FIG. 1 is a view illustrating an electronic device in a network environment according to various embodiments;
FIG. 2 is an exemplary view illustrating a function or operation of displaying a user interface by an electronic device according to an embodiment of the disclosure;
FIG. 3 is an exemplary view illustrating a function or operation of receiving a UWB signal from an external electronic device by an electronic device according to an embodiment of the disclosure;
FIG. 4A is an exemplary view illustrating an orientation angle according to an embodiment of the disclosure;
FIG. 4B is an exemplary view illustrating a method for computing an orientation angle by an electronic device according to an embodiment of the disclosure;
FIG. 5 is an exemplary view illustrating a method for computing an orientation time by an electronic device according to an embodiment of the disclosure;
FIGS. 6A to 6C are exemplary views illustrating a user interface displayed on an electronic device when a first criterion is met according to an embodiment of the disclosure;
FIG. 7 is an exemplary view illustrating an extended user interface displayed according to a user input to a user interface according to an embodiment of the disclosure;
FIG. 8 is an exemplary view illustrating another type of user interface according to an embodiment of the disclosure;
FIGS. 9A and 9B are views illustrating an example in which a user interface is displayed in the same manner even when at least one of an orientation angle, a distance, and an orientation time is different according to an embodiment of the disclosure;
FIG. 10 is an exemplary view illustrating a function or operation of changing a display turn of a user interface and display the user interface based on at least one of an orientation angle, a distance, or an orientation time meeting a second criterion according to an embodiment of the disclosure;
FIGS. 11A to 11C are exemplary views illustrating the function or operation described in FIG. 10 from a user experience point of view;
FIG. 12 is an exemplary view illustrating a function or operation of extending and displaying a user interface based on at least one of an orientation angle, a distance, or an orientation time meeting a third criterion according to an embodiment of the disclosure;
FIGS. 13A and 13B are exemplary views illustrating the function or operation described in FIG. 12 from a user experience point of view;
FIG. 14 is an exemplary view illustrating a function or operation of determining whether an electronic device is located in a specific room and, when the electronic device is located in the specific room, controlling a low-power UWB device through an always-on power UWB device according to an embodiment of the disclosure;
FIG. 15 is an exemplary view illustrating a function or operation of determining whether a specific application (e.g., a UWB device control application) is being executed through an electronic device and, when the specific application is being executed, controlling a low-power UWB device through an always-on power UWB device according to an embodiment of the disclosure; and
FIG. 16 is an exemplary view illustrating the function or operation described with reference to FIGS. 14 and 15.

[Mode for Carrying out the Invention]

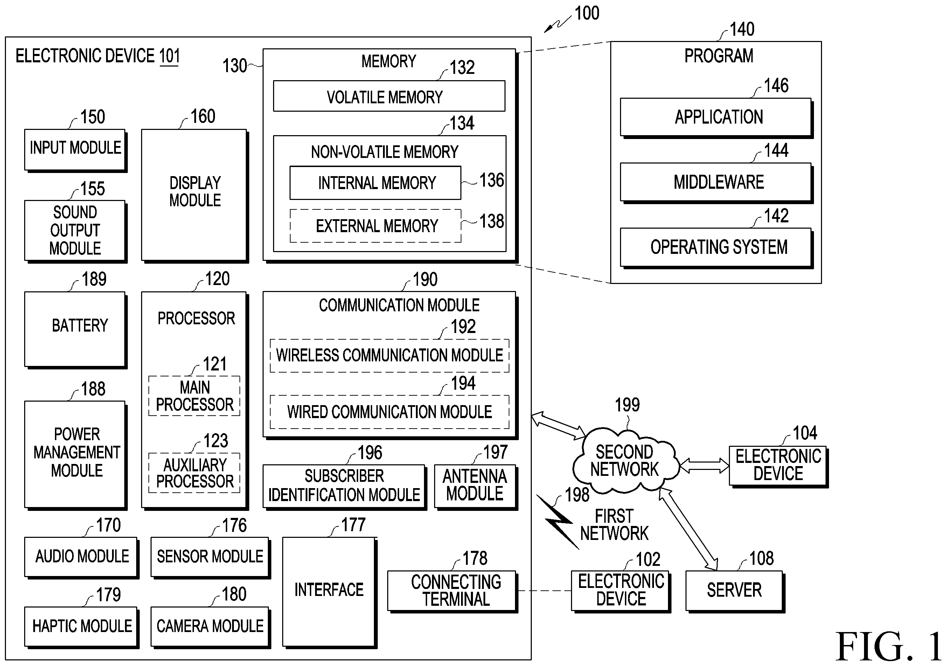

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal According to an embodiment, the display module 160 may include a first display module 351 corresponding to the user's left eye and/or a second display module 353 corresponding to the user's right eye., a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth™, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductive body or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

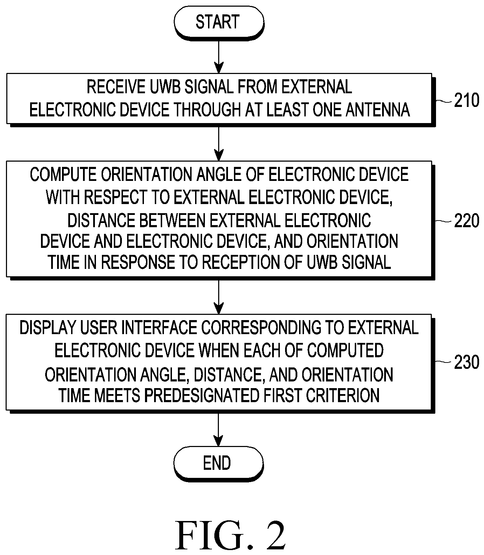

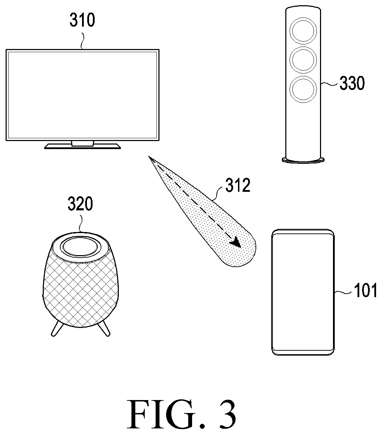

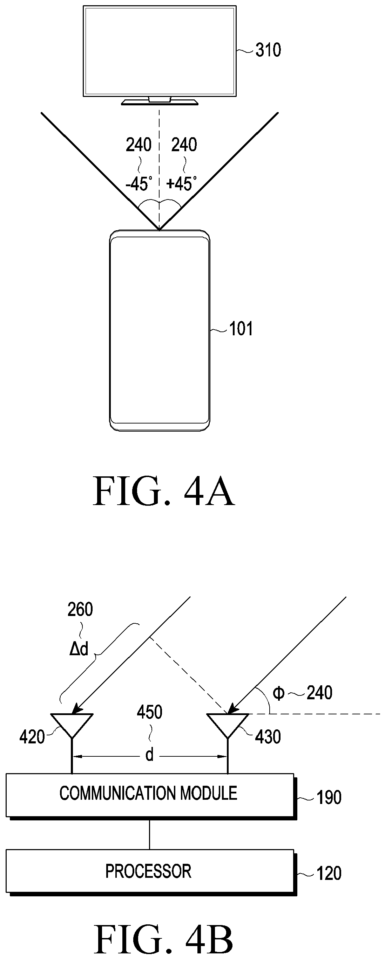

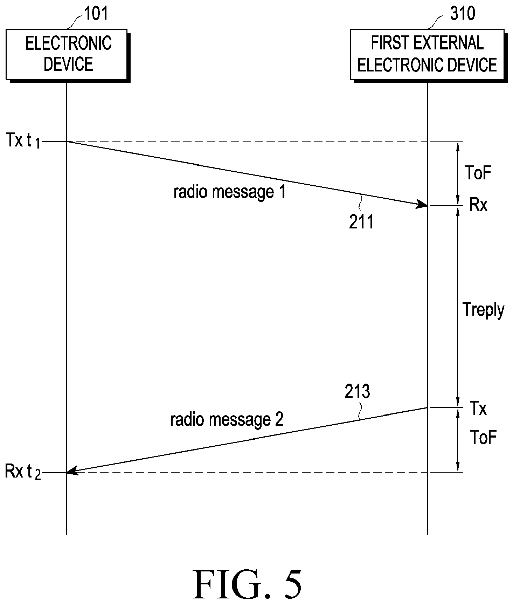

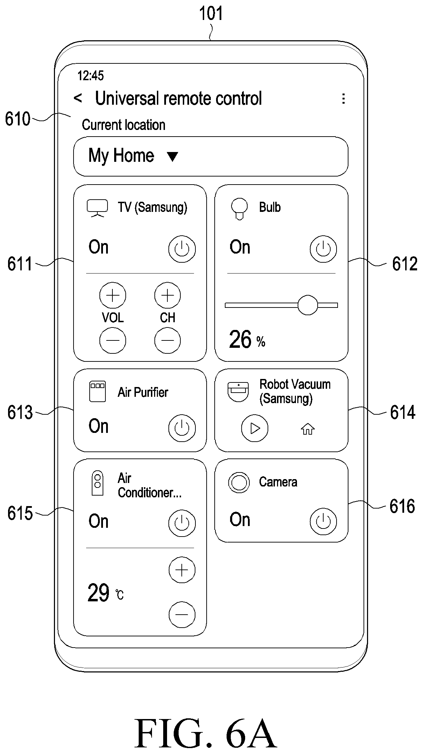

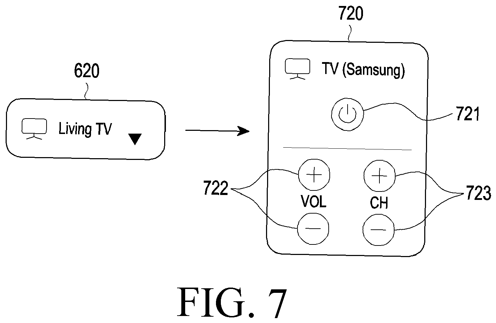

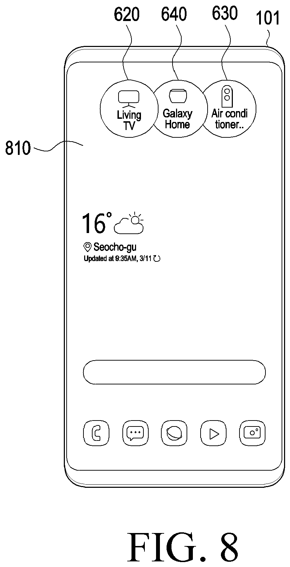

FIG. 2 is an exemplary view illustrating a function or operation of displaying a user interface by an electronic device 101 according to an embodiment of the disclosure. FIG. 3 is an exemplary view illustrating a function or operation of receiving a UWB signal from an external electronic device by an electronic device according to an embodiment of the disclosure. FIG. 4A is an exemplary view illustrating an orientation angle according to an embodiment of the disclosure. FIG. 4B is an exemplary view illustrating a method for computing an orientation angle by an electronic device according to an embodiment of the disclosure. FIG. 5 is an exemplary view illustrating a method for computing an orientation time by an electronic device according to an embodiment of the disclosure. FIGS. 6A to 6C are exemplary views illustrating a user interface displayed on an electronic device when a first criterion is met according to an embodiment of the disclosure. FIG. 7 is an exemplary view illustrating an extended user interface displayed according to a user input to a user interface according to an embodiment of the disclosure. FIG. 8 is an exemplary view illustrating another type of user interface according to an embodiment of the disclosure.

Referring to FIG. 2, in operation 210, the electronic device 101 according to an embodiment of the disclosure may receive a UWB signal 312 from an external electronic device (e.g., the first external electronic device 310) through at least one antenna. As illustrated in FIG. 3, the electronic device 101 according to an embodiment of the disclosure may receive the UWB signal 312 from external electronic devices (e.g., the first external electronic device 310 (e.g., a TV), the second external electronic device 320 (e.g., an AI speaker), and/or the third external electronic device 330 (e.g., an air conditioner)). FIG. 3 illustrates an embodiment of receiving a UWB signal 312 from any one external electronic device (e.g., the first external electronic device 310) among external electronic devices (e.g., the first external electronic device 310, the second external electronic device 320, and/or the third external electronic device 330), but this is merely an example. The UWB signal according to an embodiment of the disclosure may be output from external electronic devices (e.g., the first external electronic device 310, the second external electronic device 320, and/or the third external electronic device 330) in a broadcast manner, for example.

In operation 220, in response to reception of the UWB signal 312, the electronic device 101 according to an embodiment of the disclosure may compute the orientation angle of the electronic device with respect to the external electronic device (e.g., the first external electronic device 310, the second external electronic device 320, and/or the third external electronic device 330), the distance between the external electronic device (e.g., the first external electronic device 310, the second external electronic device 320, and/or the third external electronic device 330) and the electronic device 101, and/or the orientation time. As used herein, the term "orientation angle 240" may also be referred to as an "angle-of-arrival". Referring to FIG. 4A, the orientation angle 240 according to an embodiment of the disclosure may mean the angle in the horizontal direction with respect to a substantial center of the external electronic device (e.g., the first external electronic device 310). Referring to FIG. 4B, the electronic device 101 according to an embodiment of the disclosure may include two antennas 420 and 430. According to an embodiment of the disclosure, the electronic device 101 may know the length (d) 450 between the two antennas 420 and 430, and the distance difference $\Delta d$ 260 between the two antennas 420 and 430 may be computed using Equation 1. Here, $\theta$ 240 may mean the orientation angle to be computed.

[Equation 1]

$$\Delta d = d \cdot \cos\theta$$

Further, the phase difference ($\Delta\emptyset$) between the UWB signals 312 arriving at the two antennas 420 and 430 may be expressed as Equation 2.

[Equation 2]

$$\Delta\emptyset = \frac{2\pi}{\lambda} \cdot \Delta d$$

In Equation 2, $\lambda$ may mean the wavelength of the UWB signal 312. The electronic device 101 according to an embodiment of the disclosure may compute the orientation angle using Equation 3 derived from Equations 1 and 2.

[Equation 3]

$$\theta = \cos^{-1}\frac{\Delta\emptyset}{2\pi d/\lambda}$$

The electronic device 101 according to an embodiment of the disclosure may compute the orientation angle 240 using the length (d) 450 between the two antennas 420 and 430 and the phase difference ($\Delta\emptyset$) between the UWB signals 312 arriving at the respective UWB antennas 420 and 430. Referring to FIG. 5, when receiving the UWB signal 312 from an external electronic device (e.g., the first external electronic device 310), the electronic device 101 according to an embodiment of the disclosure may transmit a first wireless message to the external electronic device (e.g., the first external electronic device 310) in operation 211. In this case, the first wireless message according to an embodiment of the disclosure may be transmitted through a set session between the electronic device 101 and the external electronic device (e.g., the first external electronic device 310). According to an embodiment of the disclosure, a session may be set between the electronic device 101 and the external electronic device (e.g., the first external electronic device 310) according to detection of the UWB signal 312 by the electronic device 101. In operation 213, the electronic device 101 according to an embodiment of the disclosure may receive a second wireless message corresponding to the first wireless message from the external electronic device (e.g., the first external electronic device 310) after a designated time elapses after the first wireless message is received by the external electronic device (e.g., the first external electronic device 310). The second wireless message according to an embodiment of the disclosure may include information about a designated time (e.g., Treply). The electronic device 101 according to an embodiment of the disclosure may compute the time of flight (ToF) value using Equation 4 below. According to an embodiment, since the electronic device 101 is aware of information regarding the transmission speed of the radio message (e.g., the first radio message), it is possible to compute the distance between the electronic device 101 and the external electronic device (e.g., the first external electronic device 310) using the transmission speed-related information and the calculated ToF value.

[Equation 4]

$$\text{ToF} = \frac{t_2 - t_1 - T_{reply}}{2}$$

Further, the electronic device 101 according to an embodiment of the disclosure may measure the orientation time from the time when the UWB signal 312 is received (e.g., detected). For example, if the time when the UWB signal 312 according to an embodiment of the disclosure is received is 500ms, the electronic device 101 according to an embodiment of the disclosure may determine that the orientation time is 500ms.

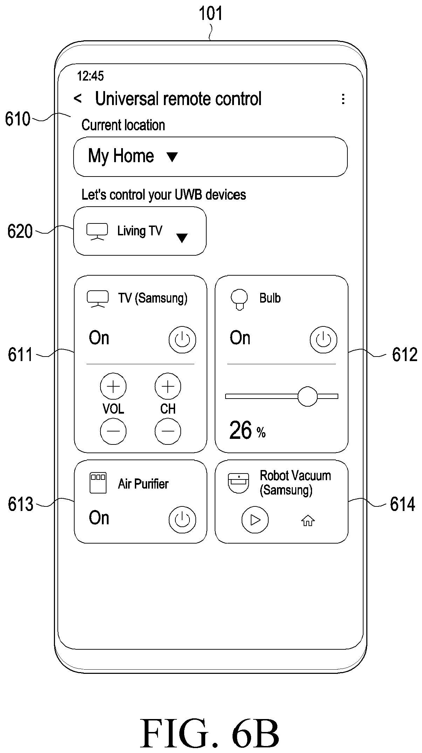

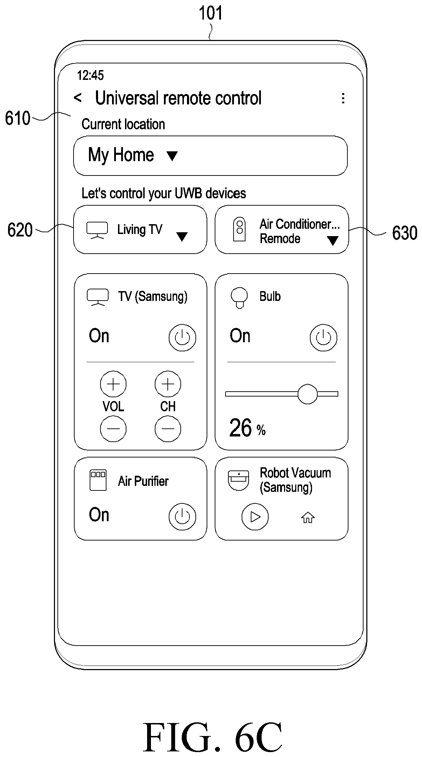

In operation 230, when the computed orientation angle 240, distance, and orientation time each meet a predesignated first criterion, the electronic device 101 according to an embodiment of the disclosure may display a user interface (e.g., the first user interface 620, the second user interface 630, and/or the third user interface 640) corresponding to the external electronic device (e.g., the first external electronic device 310, the second external electronic device 320, and/or the third external electronic device 330). According to an embodiment of the disclosure, e.g., if it is designated to display a user interface (e.g., the first user interface 620, the second user interface 630, and/or the third user interface 640) when a condition (e.g., a first reference) in which the orientation angle 240 is in the range from +45 degrees to -45 degrees, the distance is within 1.5 m, and the orientation time is 300ms or longer is met, the electronic device 101 may determine whether the above condition is met for a specific external electronic device (e.g., the first external electronic device 310). The first criterion according to an embodiment of the disclosure may include various conditions for guessing the same user intent. For example, if the orientation time is 500ms even if the distance is 2m, the user's intent may be considered to be substantially the same as when the distance is within 1.5 m and the orientation time is 300ms. Accordingly, the electronic device 101 according to an embodiment of the disclosure may store, as the first criterion, the above condition, e.g., a condition in which the orientation angle 240 is in the range from +45 degrees to -45 degrees, the distance is within 1.5m, and the orientation time is 300ms or longer, as well as the condition in which the orientation angle 240 is in the range from +45 degrees to -45 degrees, the distance is within 2m, and the orientation time is 500ms or longer. Alternatively, according to an embodiment of the disclosure, the orientation angle, the distance, and/or the orientation time may be scored and stored in the electronic device 101, and the electronic device 101 may convert the computed orientation angle, the distance, and/or the orientation time into scores and may sum the scores, and may determine the user's intent based on whether the sum of the scores is equal to or greater than a predetermined score. When it is determined that the above condition is met for a specific external electronic device (e.g., the first external electronic device 310), the electronic device 101 according to an embodiment of the disclosure may display a user interface (e.g., the first user interface 620) corresponding to the specific external electronic device (e.g., the first external electronic device 310) on the electronic device 101. Referring to FIG. 6A, the electronic device 101 according to an embodiment of the disclosure may display an execution screen 610 of a specific application (e.g., a smart home application). The specific application according to an embodiment of the disclosure may include an application for remotely controlling various home appliances disposed in the home of the user. The execution screen 610 of the specific application according to an embodiment of the disclosure may include at least one of a first graphic element 611 for controlling a TV, a second graphic element 612 for controlling a light, a third graphic element 613 for controlling an air cleaner, a fourth graphic element 614 for controlling a robot cleaner, a fifth graphic element 615 for controlling an air conditioner, and a sixth graphic element 616 for controlling a camera (e.g., a home CCTV). Referring to FIG. 6B, the electronic device 101 according to an embodiment of the disclosure may display the first user interface 620 corresponding to the specific external electronic device (e.g., the first external electronic device 310) on the execution screen 610 of the specific application when the first criterion (e.g., when the orientation angle 240 is in the range from +45 degrees to -45 degrees, the distance is within 1.5m, and the time is 300ms or longer) is met for the specific external electronic device (e.g., the first external electronic device 310). The electronic device 101 according to an embodiment of the disclosure may be configured to display a user interface when all the conditions for the orientation angle, the distance, and the orientation time are met, but may also be configured to display the user interface when at least one of the conditions for the orientation angle, the distance, and the orientation time is met. Referring to FIG. 6C, when the electronic device 101 according to an embodiment of the disclosure is oriented toward any one external electronic device (e.g., the first external electronic device 310) and then another external electronic device (e.g., the third external electronic device 330), the electronic device 101 may display a user interface (e.g., the second user interface 630) corresponding to the other external electronic device (e.g., the third external electronic device 330). According to an embodiment of the disclosure, the UWB signal output from the first external electronic device 310 may not be detected depending on the orientation of the other external electronic device (e.g., the third external electronic device 330). In this case, the electronic device 101 according to an embodiment of the disclosure may control the display such that the first user interface 620 is not displayed at a time when a predetermined time (e.g., 5 seconds) elapses from a time when the UWB signal is not detected. As another example, even if the UWB signal 312 for the first external electronic device 310 is not detected, the display for the first user interface 620 may be maintained for a predetermined time (e.g., 5 seconds). Alternatively, according to an embodiment of the disclosure, an occasion when the first criterion is not met (e.g., when the orientation angle 240 falls outside the range from +45 degrees to -45 degrees or when the distance exceeds 1.5m) depending on the orientation of another external electronic device may occur. Even in this case, the electronic device 101 according to an embodiment of the disclosure may control the display such that the first user interface 620 is not displayed at the time when the predesignated time (e.g., 5 seconds) elapses from the time when the first reference is not met. As another example, after the first criterion for the first external electronic device 310 is met, the display of the first user interface 620 may be maintained for a predetermined time (e.g., 5 seconds) even if the first criterion is not met. Referring to FIG. 7, the electronic device 101 according to an embodiment of the disclosure may receive a user input (e.g., a touch input) to the first user interface 620. When the user input is received, the electronic device 101 according to an embodiment of the disclosure may extend and display the user interface. The extended user interface 720 according to an embodiment of the disclosure may include various graphic elements for controlling the first external electronic device 310. For example, FIG. 7 exemplarily illustrates a graphic element 721 for turning on/off the power of the first external electronic device 310, a graphic element 722 for changing the volume of the first external electronic device 310, and a graphic element 723 for turning the channel of the first external electronic device 310. According to an embodiment of the disclosure, in order to provide various graphic elements, the electronic device 101 may perform a process of receiving capability information for the external electronic device from the external electronic device (e.g., the first external electronic device 310). Referring to FIG. 8, according to an embodiment of the disclosure, the user interface (e.g., the first user interface 620, the second user interface 630, and/or the third user interface 640) according to an embodiment of the disclosure may be displayed on the home screen 810. According to an embodiment of the disclosure, when the user interface (e.g., the first user interface 620, the second user interface 630, and/or the third user interface 640) is displayed on the home screen, it may be displayed in a substantially circular shape as illustrated in FIG. 8. However, this is exemplary, and the user interface (e.g., the first user interface 620, the second user interface 630, and/or the third user interface 640) may be displayed in a substantially circular shape even when displayed on the execution screen 610 of the specific application.

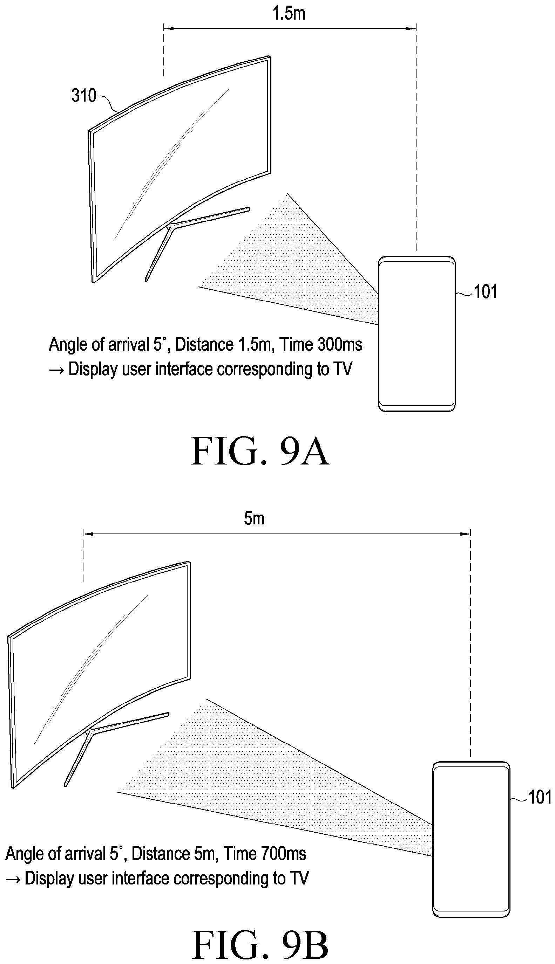

FIGS. 9A and 9B are views illustrating an example in which a user interface is displayed in the same manner even when at least one of an orientation angle, a distance, and an orientation time is different according to an embodiment of the disclosure.

Referring to FIG. 9A, when it is computed (e.g., determined) that, e.g., the orientation angle is 5 degrees, the distance is 1.5m, and the orientation time is 300ms, the electronic device 101 according to an embodiment of the disclosure may display the first user interface 620 corresponding to the first external electronic device 310 because this is the case of meeting the first criterion (e.g., when the orientation angle 240 is in the range from +45 degrees to -45 degrees, the distance is within 1.5m, and the time is 300ms or longer). Referring to FIG. 9B, when it is computed (e.g., determined) that, e.g., the orientation angle is 5 degrees, the distance is 5m, and the orientation time is 700ms, the electronic device 101 according to an embodiment of the disclosure may determine that this is also the case of meeting the first criterion. As another example, since the distance is 5m but the orientation time is 700ms, the user's intent may be guessed as an intent to control the first external electronic device, and thus such a case may also be stored in the electronic device 101 as the first criterion. The electronic device 101 according to an embodiment of the disclosure may display the first user interface 620 corresponding to the first external electronic device 310 even when illustrated in FIG. 9B.

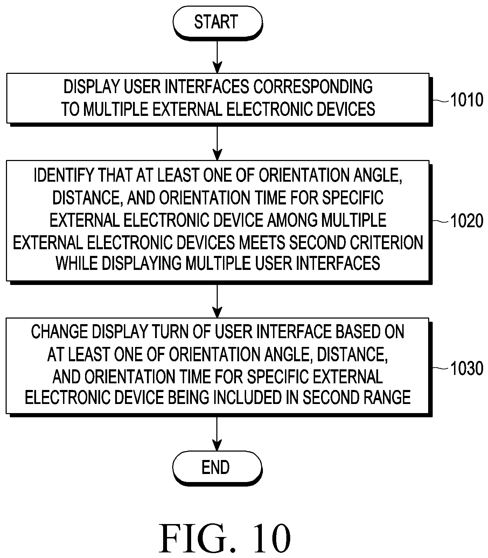

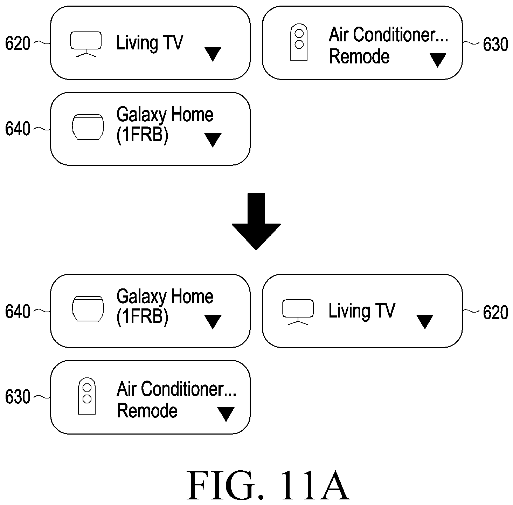

FIG. 10 is an exemplary view illustrating a function or operation of changing a display turn of a user interface and display the user interface based on at least one of an orientation angle 240, a distance, or an orientation time meeting a second criterion according to an embodiment of the disclosure. FIGS. 11A to 11C are exemplary views illustrating the function or operation described in FIG. 10 from a user experience point of view.

Referring to FIG. 10, in operation 1010, the electronic device 101 according to an embodiment of the disclosure may display user interfaces corresponding to a plurality of external electronic devices (e.g., the first external electronic device 310, the second external electronic device 320, and/or the third external electronic device 330). According to an embodiment of the disclosure, the case where user interfaces corresponding to a plurality of external electronic devices (e.g., the first external electronic device 310, the second external electronic device 320, and/or the third external electronic device 330) are displayed may be the case where the first criterion is met for all of the plurality of external electronic devices (e.g., the first external electronic device 310, the second external electronic device 320, and/or the third external electronic device 330) or the case where all of the user interfaces respectively corresponding to the first external electronic device 310, the second external electronic device 320, and the third external electronic device 330 are displayed as the designated time (e.g., 5 seconds) does not expire when the electronic device 101 is sequentially oriented toward the second external electronic device 320 and the third external electronic device 330 after being oriented toward the first external electronic device 310.

In operation 1020, while displaying the plurality of user interfaces (e.g., the first user interface 620, the second user interface 630, and the third user interface 640), the electronic device 101 according to an embodiment of the disclosure may identify that at least one of the orientation angle, the distance, and the orientation time for a specific external electronic device (e.g., the second external electronic device 320) among the plurality of external electronic devices (e.g., the first external electronic device 310, the second external electronic device 320, and the third external electronic device 330) meets the second criterion. For example, the electronic device 101 according to an embodiment of the disclosure may identify (e.g., determine) whether the orientation time for the specific external electronic device (e.g., the second external electronic device 320) meets a predetermined second criterion (e.g., the orientation time is 500ms or longer).

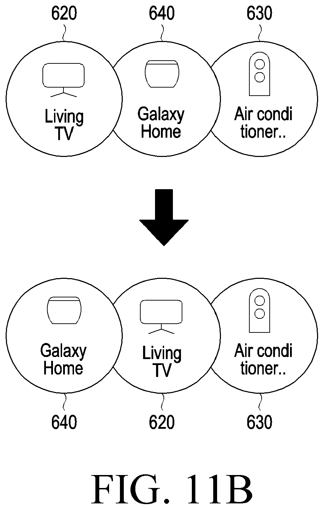

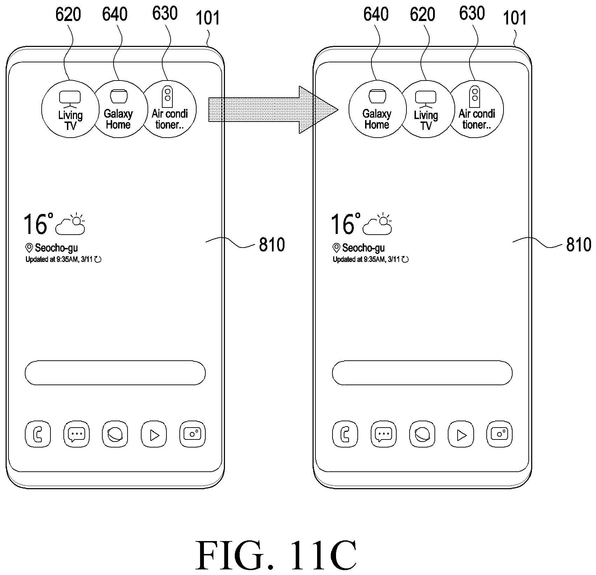

In operation 1030, the electronic device 101 according to an embodiment of the disclosure may change the display turn of the user interface (e.g., the third user interface 640) corresponding to the second external electronic device 320, based on at least one of the orientation angle, the distance, and the orientation time for the specific external electronic device (e.g., the second external electronic device 320) meeting the second criterion. Referring to FIG. 11A, the electronic device 101 according to an embodiment of the disclosure may be oriented in the order of the first external electronic device 310 (e.g., a TV), the third external electronic device 330 (e.g., an air conditioner), and the second external electronic device 320 (e.g., an AI speaker), but when the orientation time for the second external electronic device 320 is 500ms or longer, the display turn of the user interface (e.g., the third user interface 640) corresponding to the second external electronic device 320 may be moved to the first turn (e.g., top left). Similarly, referring to FIG. 11B, the electronic device 101 according to an embodiment of the disclosure may be oriented in the order of the first external electronic device 310 (e.g., a TV), the second external electronic device 330 (e.g., an AI speaker), and the third external electronic device 320 (e.g., an air conditioner), but when the orientation time for the second external electronic device 320 is 500ms or longer, the display turn of the user interface (e.g., the third user interface 640) corresponding to the second external electronic device 320 may be moved to the first turn (e.g., left). FIG. 11C illustrates an embodiment in which the embodiment illustrated in FIG. 11B is displayed on the home screen 810. According to an embodiment of the disclosure, the UWB signal output from the second external electronic device 320 may not be detected depending on the orientation of the other external electronic device (e.g., the third external electronic device 330). In this case, the electronic device 101 according to an embodiment of the disclosure may control the display module 160 to return to the state before the priority is changed at the time when a predesignated time (e.g., 5 seconds) elapses from the time when the UWB signal is not detected.

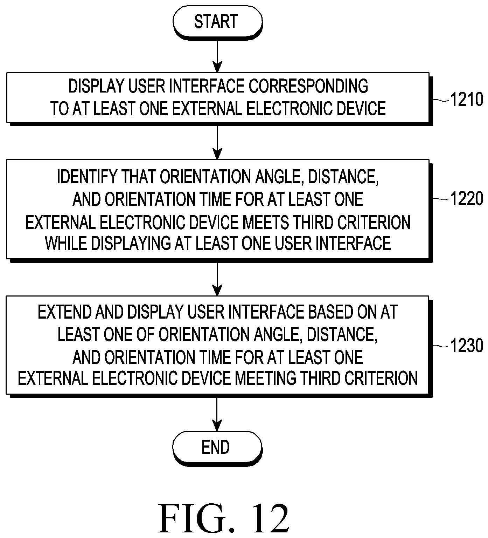

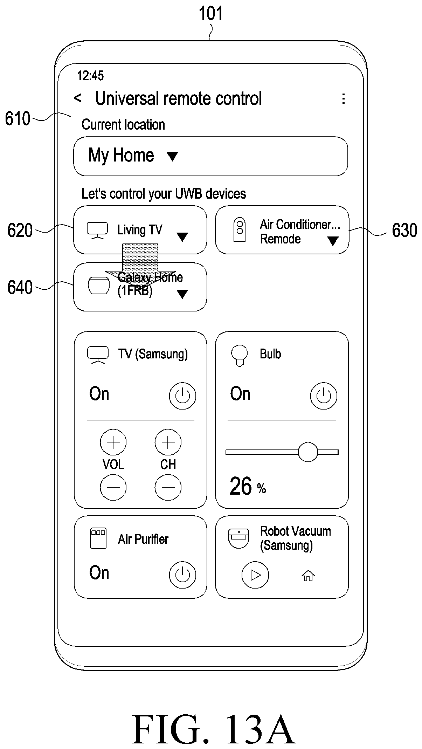

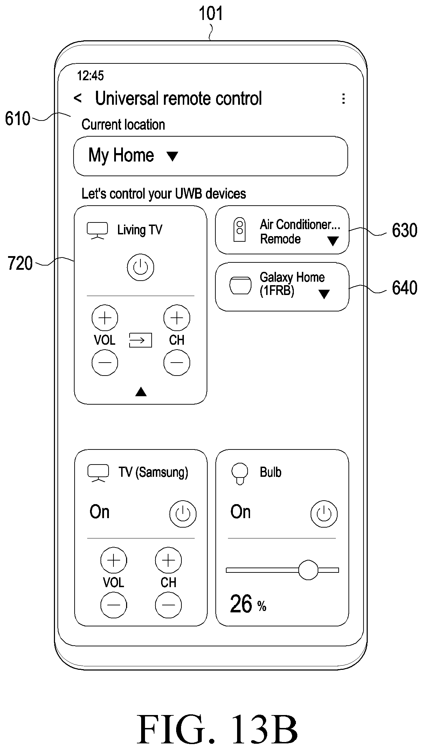

FIG. 12 is an exemplary view illustrating a function or operation of extending and displaying a user interface based on at least one of an orientation angle 240, a distance, or an orientation time meeting a third criterion according to an embodiment of the disclosure. FIGS. 13A and 13B are exemplary views illustrating the function or operation described in FIG. 12 from a user experience point of view.

Referring to FIG. 12, in operation 1210, the electronic device 101 according to an embodiment of the disclosure may display a user interface corresponding to at least one external electronic device. FIG. 13A illustrates an embodiment in which the plurality of user interfaces (e.g., the first user interface 620, the second user interface 630, and the third user interface 640) are displayed. According to an embodiment of the disclosure, the case where user interfaces corresponding to a plurality of external electronic devices (e.g., the first external electronic device 310, the second external electronic device 320, and/or the third external electronic device 330) are displayed may be the case where the first criterion is met for all of the plurality of external electronic devices (e.g., the first external electronic device 310, the second external electronic device 320, and/or the third external electronic device 330) or the case where all of the user interfaces respectively corresponding to the first external electronic device 310, the second external electronic device 320, and the third external electronic device 330 are displayed as the designated time (e.g., 5 seconds) does not expire when the electronic device 101 is sequentially oriented toward the second external electronic device 320 and the third external electronic device 330 after being oriented toward the first external electronic device 310.

In operation 1220, the electronic device 101 according to an embodiment of the disclosure may identify that at least one of the orientation angle 240, the distance, and the orientation time for the at least one external electronic device meets the third criterion while displaying the at least one user interface. For example, the electronic device 101 according to an embodiment of the disclosure may identify (e.g., determine) whether the orientation angle 240 and the orientation time for at least one external electronic device (e.g., the first external electronic device 310) meet a predetermined third criterion (e.g., the orientation angle is included in the range from +30 degrees to -30 degrees, and the orientation time is 500ms or longer).

In operation 1230, the electronic device 101 according to an embodiment of the disclosure may extend and display the user interface, based on at least one of the orientation angle, the distance, and the orientation time for the at least one external electronic device (e.g., the first external electronic device 310) meeting the third criterion. The extended user interface 720 according to an embodiment of the disclosure may include various graphic elements for controlling the first external electronic device 310. For example, FIG. 13B exemplarily illustrates a graphic element for turning on/off the power of the first external electronic device 310, a graphic element for changing the volume of the first external electronic device 310, and a graphic element for turning the channel of the first external electronic device 310. According to an embodiment of the disclosure, in order to provide various graphic elements, the electronic device 101 may perform a process of receiving capability information for the external electronic device from the external electronic device (e.g., the first external electronic device 310). According to an embodiment of the disclosure, the UWB signal output from the first external electronic device 310 may not be detected depending on the orientation of the other external electronic device (e.g., the third external electronic device 330). In this case, the electronic device 101 according to an embodiment of the disclosure may control the display module 160 such that the extended first user interface 720 is shrunken back at a time when a predesignated time (e.g., 5 seconds) elapses from the time when the UWB signal is not detected. For example, the electronic device 101 according to an embodiment of the disclosure may control the display module 160 such that the extended first user interface 720 is shrunken back at a time when a first predesignated time (e.g., 5 seconds) elapses from a time when the UWB signal is not detected, and may control the display module 160 such that the shrunken first user interface 620 is not displayed at a time when a second predesignated time (e.g., 5 seconds) elapses from the time of shrinkage. According to an embodiment of the disclosure, the first predesignated time and the second predesignated time may be set to be different from each other.

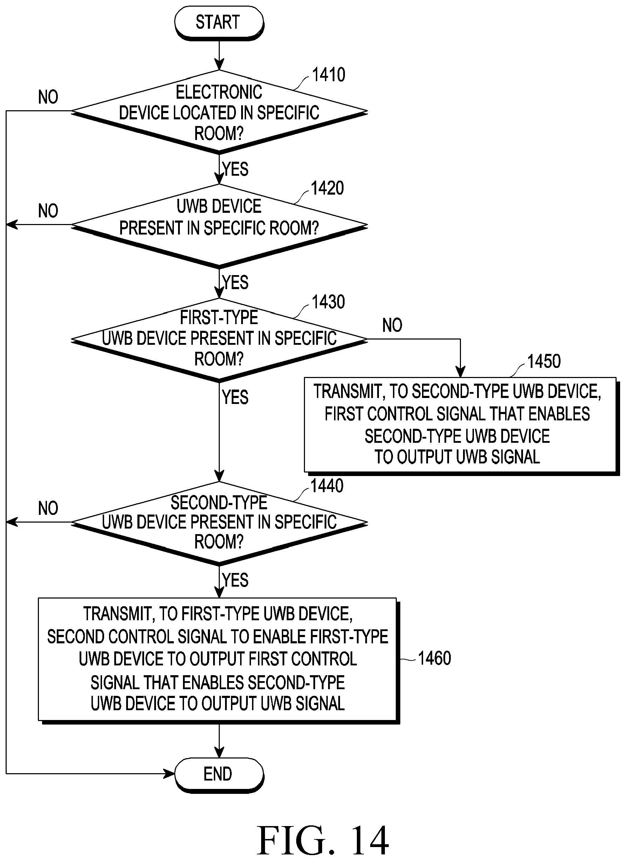

FIG. 14 is an exemplary view illustrating a function or operation of determining whether an electronic device is located in a specific room and, when the electronic device is located in the specific room, controlling a low-power UWB device through an always-on power UWB device according to an embodiment of the disclosure.

Referring to FIG. 14, the electronic device 101 according to an embodiment of the disclosure may determine whether the electronic device is located in a specific room in operation 1410. The electronic device 101 according to an embodiment of the disclosure may determine whether the electronic device 101 is located in a specific room (e.g., the user's home) using a signal (e.g., a Bluetooth low energy beacon signal, a Wi-Fi signal, or a UWB signal) output (e.g., broadcast) from a low-power external electronic device. For example, the electronic device 101 according to an embodiment of the disclosure may receive a Bluetooth low energy beacon signal from an external electronic device and determine whether the electronic device 101 is currently located in the specific room based on whether the device transmitting the Bluetooth low energy beacon signal is a device registered (e.g., stored) in the electronic device 101 (e.g., the electronic device 101 is determined to be located in the specific room when there is a history of receiving the transmitted Bluetooth low energy beacon signal or when information about the electronic device transmitting the Bluetooth low energy beacon signal is stored in the electronic device 101).

In operation 1420 (Yes in 1410), the electronic device 101 according to an embodiment of the disclosure may determine whether there is a UWB device in the specific room. The electronic device 101 according to an embodiment of the disclosure may determine whether the corresponding devices are devices supporting the UWB communication function using information included in various signals transmitted from a plurality of external electronic devices located in the specific room, or may determine whether there is a UWB device in the specific room based on whether there is a device registered as a device supporting the UWB communication function in the specific room. According to an embodiment of the disclosure, operation 1420 may be omitted.

In operation 1430 (Yes in 1420), the electronic device 101 according to an embodiment of the disclosure may determine whether a first-type UWB device is present in the specific room. The first-type UWB device according to an embodiment of the disclosure may refer to, e.g., a device (e.g., a TV) configured to output a UWB signal on a regular basis. The electronic device 101 according to an embodiment of the disclosure may determine whether the corresponding device is the first-type UWB device from a signal (e.g., a UWB signal) transmitted from the first-type UWB device, or may determine whether the corresponding device is the first-type UWB device using information previously stored (e.g., registered) in the electronic device 101 in association with the specific room.

In operation 1440 (Yes in 1430), the electronic device 101 according to an embodiment of the disclosure may determine whether a second-type UWB device is present in the specific room. The second-type UWB device according to an embodiment of the disclosure may refer to, e.g., a device (e.g., an AI speaker) configured to temporarily output a UWB signal. The electronic device 101 according to an embodiment of the disclosure may determine whether the corresponding device is the first-type UWB device from a signal (e.g., a BLE signal) transmitted from the second-type UWB device, or may determine whether the corresponding device is the second-type UWB device using information previously stored (e.g., registered) in the electronic device 101 in association with the specific room. In operation 1450 (No in 1430), when it is determined that the first-type UWB device is not present in the specific room, the electronic device 101 according to an embodiment of the disclosure may transmit, to the second-type UWB device, a first control signal (e.g., a wake-up command) that enables the second-type UWB device to output the UWB signal. According to an embodiment of the disclosure, the electronic device 101 may transmit the first control signal (e.g., a wake-up command) to the second-type UWB device through broadcasting. According to an embodiment of the disclosure, the electronic device 101 may transmit a wake-up-only UWB signal to the second-type UWB device.

In operation 1460 (Yes in 1440), the electronic device 101 according to an embodiment of the disclosure may transmit, to the first-type UWB device, a second control signal for enabling the first-type UWB to output the first control signal for enabling the second-type UWB device to output a UWB signal. According to the above operation, the second-type UWB device may output a UWB signal.

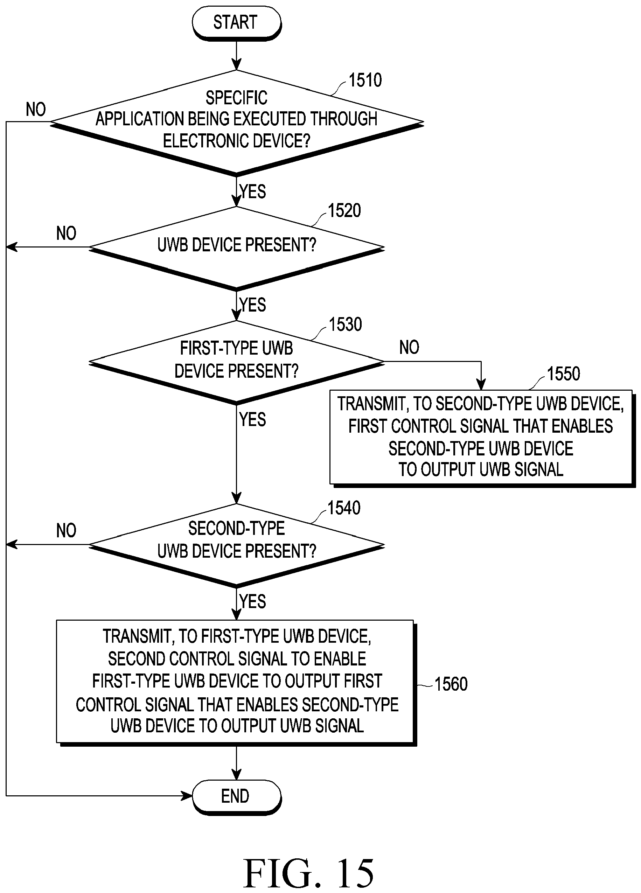

FIG. 15 is an exemplary view illustrating a function or operation of determining whether a specific application (e.g., a UWB device control application) is being executed through an electronic device and, when the specific application is being executed, controlling a low-power UWB device through an always-on power UWB device according to an embodiment of the disclosure.

In operation 1510, the electronic device 101 according to an embodiment of the disclosure may determine whether a specific application (e.g., a UWB device control application) is being executed through the electronic device 101. In operation 1520 (Yes in 1510), the electronic device 101 according to an embodiment of the disclosure may determine whether there is a UWB device around the electronic device 101. The electronic device 101 according to an embodiment of the disclosure may determine whether the corresponding devices are devices supporting the UWB communication function, using information included in various signals transmitted from a plurality of external electronic devices located around the electronic device 101. According to an embodiment of the disclosure, operation 1520 may be omitted.

In operation 1530 (Yes in 1520), the electronic device 101 according to an embodiment of the disclosure may determine whether there is a first-type UWB device around the electronic device 101. The first-type UWB device according to an embodiment of the disclosure may refer to, e.g., a device (e.g., a TV) configured to output a UWB signal on a regular basis. The electronic device 101 according to an embodiment of the disclosure may determine whether the corresponding device is the first-type UWB device from a signal (e.g., a UWB signal) transmitted from the first-type UWB device, or may determine whether the corresponding device is the first-type UWB device using information previously stored (e.g., registered) in the electronic device 101 in association with the current location of the electronic device 101. According to an embodiment of the disclosure, in order to perform operation 1530, an operation of determining the current location of the electronic device 101 may be further performed.

In operation 1540 (Yes in 1530), the electronic device 101 according to an embodiment of the disclosure may determine whether there is a second-type UWB device around the electronic device 101. The second-type UWB device according to an embodiment of the disclosure may refer to, e.g., a device (e.g., an AI speaker) configured to temporarily output a UWB signal. The electronic device 101 according to an embodiment of the disclosure may determine whether the corresponding device is the second-type UWB device from a signal (e.g., a BLE signal) transmitted from the first-type UWB device, or may determine whether the corresponding device is the second-type UWB device using information previously stored (e.g., registered) in the electronic device 101 in association with the current location of the electronic device 101. In operation 1550 (No in 1530), when it is determined that the first-type UWB device is not present in the specific room, the electronic device 101 according to an embodiment of the disclosure may transmit, to the second-type UWB device, a first control signal (e.g., a wake-up command) that enables the second-type UWB device to output the UWB signal. According to an embodiment of the disclosure, in order to perform operation 1540, an operation of determining the current location of the electronic device 101 may be further performed.

In operation 1560 (Yes in 1540), the electronic device 101 according to an embodiment of the disclosure may transmit, to the first-type UWB device, a second control signal for enabling the first-type UWB to output the first control signal for enabling the second-type UWB device to output a UWB signal. According to the above operation, the second-type UWB device may output a UWB signal.

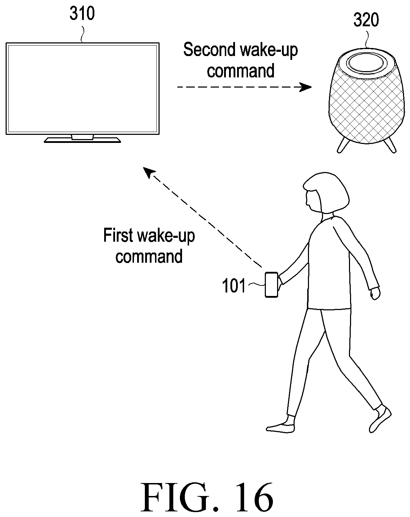

FIG. 16 is an exemplary view illustrating the function or operation described with reference to FIGS. 14 and 15. Referring to FIG. 16, the electronic device 101 according to an embodiment of the disclosure may transmit a first wake-up command to a first-type UWB device (e.g., the first external electronic device 310), and accordingly, the first-type UWB device may transmit a second wake-up command for enabling the second-type UWB device to output a UWB signal to the second-type UWB device (e.g., the second external electronic device 320).

An electronic device (e.g., the electronic device 101 of FIG. 1) according to an embodiment of the disclosure may comprise at least one antenna (e.g., the antenna module 197 of FIG. 1), a touchscreen display (e.g., the display module 160 of FIG. 1), and at least one processor (e.g., the processor 120 of FIG. 1) operatively connected to the at least one antenna and the touchscreen display. The at least one processor may be configured to receive an ultra-wideband (UWB) signal from an external electronic device (e.g., the first external electronic device 310, the second external electronic device 320, or the third external electronic device 330) through the at least one antenna, compute an orientation angle 240 of the electronic device with respect to the external electronic device, a distance between the external electronic device and the electronic device, and an orientation time, in response to the reception of the UWB signal, when each of the computed orientation angle, the distance, and the orientation time meets a predesignated first criterion, display a user interface (e.g., the first user interface 620, the second user interface 630, or the third user interface 640) corresponding to the external electronic device, and when any one of the computed orientation angle, the distance, and the orientation time does not meet the first criterion, display the user interface corresponding to the external electronic device through the touchscreen display based on at least one of the rest meeting a second criterion different from the first criterion.

An electronic device (e.g., the electronic device 101 of FIG. 1) according to an embodiment of the disclosure may comprise at least one antenna (e.g., the antenna module 197 of FIG. 1) and at least one processor (e.g., the processor 120 of FIG. 1) operatively connected to the at least one antenna. The at least one processor may be configured to determine whether the electronic device is located in a specific room, based on receiving a Bluetooth low energy (BLE) signal or a UWB signal transmitted from an external electronic device through the at least one antenna, determine whether a first-type UWB device is present in the specific room, based on determining that the electronic device is located in the specific room, and transmit a command for enabling the first-type external electronic device to output the UWB signal to a second-type external electronic device, based on determining that the first-type UWB device is present in the specific room.

According to an embodiment of the disclosure, when there are a plurality of external electronic devices, the at least one processor may be further configured to determine whether the orientation angle, the distance, and the orientation time for each of the plurality of external electronic devices meets the first criterion (e.g., a condition in which the orientation angle 240 is in a range from +45 degrees to -45 degrees, the distance is within 1.5m, and the orientation time is 300ms or longer).

According to an embodiment of the disclosure, the at least one processor may be further configured to, when the orientation angle, the distance, and the orientation time for each of the plurality of external electronic devices meet the first criterion, display the user interface (e.g., the first user interface 620, the second user interface 630, and/or the third user interface 640) for each of the plurality of external electronic devices.

According to an embodiment of the disclosure, the user interface (e.g., the first user interface 620, the second user interface 630, and/or the third user interface 640) for each of the plurality of external electronic devices may be displayed sequentially according to an order oriented by the electronic device.

According to an embodiment of the disclosure, the at least one processor may be further configured to display the user interface (e.g., the first user interface 620, the second user interface 630, and/or the third user interface 640) whose display turn is changed, based on determining that at least one of the orientation angle, the distance, or the orientation time for any one of the plurality of external electronic devices meets a third criterion (e.g., the orientation angle is included in a range from +30 degrees to -30 degrees, and the orientation time is 500ms or longer).

According to an embodiment of the disclosure, the at least one processor may be further configured to display the user interface (e.g., the first user interface 620, the second user interface 630, and/or the third user interface 640) changed to be extended, based on determining that at least one of the orientation angle, the distance, and the orientation time for any one of the plurality of external electronic devices meets a fourth criterion.

According to an embodiment of the disclosure, the extended user interface (e.g., the first user interface 620, the second user interface 630, and/or the third user interface 640) may include at least one graphic element for controlling the any one external electronic device.

According to an embodiment of the disclosure, the at least one processor may be further configured not to display the user interface (e.g., the first user interface 620, the second user interface 630, and/or the third user interface 640) when the UWB signal is not detected for a predesignated time or longer.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device, comprising:

   at least one antenna;
   a touchscreen display;
   at least one processor operatively connected to the at least one antenna and the touchscreen display, and
   memory storing instructions that, when executed by the at least one processor, cause the electronic device to:

   receive an ultra-wideband (UWB) signal from an external electronic device through the at least one antenna;
   compute an orientation angle of the electronic device with respect to the external electronic device, a distance between the external electronic device and the electronic device, and an orientation time, in response to the reception of the UWB signal;
   when each of the computed orientation angle, the distance, and the orientation time meets a predesignated first criterion, display a user interface corresponding to the external electronic device; and
   when any one of the computed orientation angle, the distance, and the orientation time does not meet the first criterion, display the user interface corresponding to the external electronic device through the touchscreen display based on at least one of the rest meeting a second criterion different from the first criterion.

2. The electronic device of claim 1, wherein, when there are a plurality of external electronic devices, the instructions cause the electronic device to determine whether the orientation angle, the distance, and the orientation time for each of the plurality of external electronic devices meets the first criterion.

3. The electronic device of claim 2, wherein the instructions cause the electronic device to, when the orientation angle, the distance, and the orientation time for each of the plurality of external electronic devices meet the first criterion, display the user interface for each of the plurality of external electronic devices.

4. The electronic device of claim 3, wherein the user interface for each of the plurality of external electronic devices is displayed sequentially according to an order oriented by the electronic device.

5. The electronic device of claim 3, wherein the instructions cause the electronic device to display the user interface whose display turn is changed, based on determining that at least one of the orientation angle, the distance, or the orientation time for any one of the plurality of external electronic devices meets a third criterion.

6. The electronic device of claim 2, wherein the instructions cause the electronic device to display the user interface changed to be extended, based on determining that at least one of the orientation angle, the distance, and the orientation time for any one of the plurality of external electronic devices meets a fourth criterion.

7. The electronic device of claim 6, wherein the extended user interface includes at least one graphic element for controlling the any one external electronic device.

8. The electronic device of claim 1, wherein the instructions cause the electronic device to refrain from displaying the user interface when the UWB signal is not detected for a predesignated time or longer.

9. An electronic device, comprising:

   at least one antenna;
   at least one processor operatively connected to the at least one antenna, and
   memory storing instructions that, when executed by the at least one processor, cause the electronic device to:

      determine whether the electronic device is located in a specific room, based on receiving a Bluetooth low energy (BLE) signal or a UWB signal transmitted from an external electronic device through the at least one antenna;
      determine whether a first-type UWB device is present in the specific room, based on determining that the electronic device is located in the specific room; and
      transmit a command for enabling the first-type external electronic device to output the UWB signal to a second-type external electronic device, based on determining that the first-type UWB device is present in the specific room.

10. The electronic device of claim 9, wherein the instructions cause the electronic device to determine whether the electronic device is located in the specific room by comparing identification information included in the Bluetooth low energy signal and reference identification information stored in the electronic device.

11. The electronic device of claim 9, wherein the instructions cause the electronic device to transmit a first control signal for enabling the second-type UWB device to output the UWB signal to the second-type UWB device, based on determining that the first-type UWB device is not present in the specific room.

12. The electronic device of claim 9, wherein the instructions cause the electronic device to determine whether the UWB device is present in the specific room based on at least one of information stored in the electronic device, the Bluetooth low energy signal, or the UWB signal.

13. A method comprising:

   receiving an ultra-wideband (UWB) signal from an external electronic device through at least one antenna of the electronic device;
   computing an orientation angle of the electronic device with respect to the external electronic device, a distance between the external electronic device and the electronic device, and an orientation time, in response to the reception of the UWB signal;
   when each of the computed orientation angle, the distance, and the orientation time meets a predesignated first criterion, displaying a user interface corresponding to the external electronic device; and
   when any one of the computed orientation angle, the distance, and the orientation time does not meet the first criterion, displaying the user interface corresponding to the external electronic device based on at least one of the rest meeting a second criterion different from the first criterion.

14. The method of claim 13, further comprising, when there are a plurality of external electronic devices, determining whether the orientation angle, the distance, and the orientation time for each of the plurality of external electronic devices meets the first criterion.

15. The method of claim 14, further comprising, when the orientation angle, the distance, and the orientation time for each of the plurality of external electronic devices meet the first criterion, displaying the user interface for each of the plurality of external electronic devices.

EP 4 395 334 A1

FIG. 1

ELECTRONIC DEVICE 101

INPUT MODULE 150

SOUND OUTPUT MODULE 155

DISPLAY MODULE 160

MEMORY 130

VOLATILE MEMORY 132

NON-VOLATILE MEMORY 134

INTERNAL MEMORY 136

EXTERNAL MEMORY 138

PROGRAM 140

APPLICATION 146

MIDDLEWARE 144

OPERATING SYSTEM 142

BATTERY 189

PROCESSOR 120

MAIN PROCESSOR 121

AUXILIARY PROCESSOR 123

POWER MANAGEMENT MODULE 188

COMMUNICATION MODULE 190

WIRELESS COMMUNICATION MODULE 192

WIRED COMMUNICATION MODULE 194

SUBSCRIBER IDENTIFICATION MODULE 196

ANTENNA MODULE 197

AUDIO MODULE 170

SENSOR MODULE 176

INTERFACE 177

HAPTIC MODULE 179

CAMERA MODULE 180

CONNECTING TERMINAL 178

100

199 SECOND NETWORK

198 FIRST NETWORK

ELECTRONIC DEVICE 104

ELECTRONIC DEVICE 102

SERVER 108

START

RECEIVE UWB SIGNAL FROM EXTERNAL
ELECTRONIC DEVICE THROUGH AT LEAST ONE ANTENNA ── 210

COMPUTE ORIENTATION ANGLE OF ELECTRONIC DEVICE
WITH RESPECT TO EXTERNAL ELECTRONIC DEVICE,
DISTANCE BETWEEN EXTERNAL ELECTRONIC
DEVICE AND ELECTRONIC DEVICE, AND ORIENTATION
TIME IN RESPONSE TO RECEPTION OF UWB SIGNAL ── 220

DISPLAY USER INTERFACE CORRESPONDING TO EXTERNAL
ELECTRONIC DEVICE WHEN EACH OF COMPUTED
ORIENTATION ANGLE, DISTANCE, AND ORIENTATION
TIME MEETS PREDESIGNATED FIRST CRITERION ── 230

END

# FIG. 2

FIG. 3

FIG. 4A

FIG. 4B

FIG. 5

101

610
12:45
< Universal remote control ⋮
Current location
My Home ▼

611
TV (Samsung)
On ⏻
⊕ ⊕
VOL CH
⊖ ⊖

612
Bulb
On ⏻
━━━━━○━━━
26 %

613
Air Purifier
On ⏻

614
Robot Vacuum (Samsung)
▷ ⌂

615
Air Conditioner...
On ⏻
⊕
29 ℃
⊖

616
Camera
On ⏻

FIG. 6A

101

12:45

< Universal remote control ⋮

610 ~ Current location

My Home ▼

Let's control your UWB devices

620 ~ 🖥 Living TV ▼

🖥 TV (Samsung)

On ⏻

⊕     ⊕
VOL   CH
⊖     ⊖

611 ~

💡 Bulb

On ⏻

━━━━━●━━━

26 %

612

📦 Air Purifier

On ⏻

613 ~

Robot Vacuum
(Samsung)

▷ ⌂

614

FIG. 6B

**101**

12:45

< Universal remote control ⋮

**610** Current location

My Home ▼

Let's control your UWB devices

**620** 📺 Living TV ▼   |   🎛 Air Conditioner... Remode ▼ **630**

📺 TV (Samsung)

On ⏻

⊕ ⊕
VOL CH
⊖ ⊖

💡 Bulb

On ⏻

━━━━━━⦿━━

**26** %

▦ Air Purifier

On ⏻

🤖 Robot Vacuum (Samsung)

▷ ⌂

# FIG. 6C

FIG. 7

620    640    630    101

Living
TV

Galaxy
Home

Air condi
tioner..

810

16° ⛅

◎ Seocho-gu
Updated at 9:35AM, 3/11 ↻

FIG. 8

1.5m

310

Angle of arrival 5°, Distance 1.5m, Time 300ms
→ Display user interface corresponding to TV

101

FIG. 9A

5m

Angle of arrival 5°, Distance 5m, Time 700ms
→ Display user interface corresponding to TV

101

FIG. 9B

START

DISPLAY USER INTERFACES CORRESPONDING
TO MULTIPLE EXTERNAL ELECTRONIC DEVICES — 1010

IDENTIFY THAT AT LEAST ONE OF ORIENTATION ANGLE,
DISTANCE, AND ORIENTATION TIME FOR SPECIFIC
EXTERNAL ELECTRONIC DEVICE AMONG MULTIPLE — 1020
EXTERNAL ELECTRONIC DEVICES MEETS SECOND CRITERION
WHILE DISPLAYING MULTIPLE USER INTERFACES

CHANGE DISPLAY TURN OF USER INTERFACE BASED ON
AT LEAST ONE OF ORIENTATION ANGLE, DISTANCE,
AND ORIENTATION TIME FOR SPECIFIC EXTERNAL — 1030
ELECTRONIC DEVICE BEING INCLUDED IN SECOND RANGE

END

FIG. 10

620 〜 | 🖥 Living TV ▼ |

630 〜 | 🔲 Air Conditioner... Remode ▼ |

640 〜 | ⬚ Galaxy Home (1FRB) ▼ |

⬇

640 〜 | ⬚ Galaxy Home (1FRB) ▼ |

620 〜 | 🖥 Living TV ▼ |

630 〜 | 🔲 Air Conditioner... Remode ▼ |

FIG. 11A

620　　　640　　　630

Living
TV

Galaxy
Home

Air condi
tioner..

Galaxy
Home

Living
TV

Air condi
tioner..

640　　　620　　　630

# FIG. 11B

620   640   630   101

Living TV   Galaxy Home   Air condi tioner..

16° ☁☀
⦿ Seocho-gu
Updated at 9:35AM, 3/11 ↻

810

640   620   630   101

Galaxy Home   Living TV   Air condi tioner..

16° ☁☀
⦿ Seocho-gu
Updated at 9:35AM, 3/11 ↻

810

# FIG. 11C

START

DISPLAY USER INTERFACE CORRESPONDING
TO AT LEAST ONE EXTERNAL ELECTRONIC DEVICE — 1210

IDENTIFY THAT ORIENTATION ANGLE, DISTANCE,
AND ORIENTATION TIME FOR AT LEAST ONE
EXTERNAL ELECTRONIC DEVICE MEETS THIRD CRITERION
WHILE DISPLAYING AT LEAST ONE USER INTERFACE — 1220

EXTEND AND DISPLAY USER INTERFACE BASED ON AT
LEAST ONE OF ORIENTATION ANGLE, DISTANCE,
AND ORIENTATION TIME FOR AT LEAST ONE
EXTERNAL ELECTRONIC DEVICE MEETING THIRD CRITERION — 1230

END

# FIG. 12

101

FIG. 13A

101

610

12:45

< Universal remote control ⋮

Current location

My Home ▼

Let's control your UWB devices

720

🖥 Living TV

⏻

⊕ ⊕
VOL → CH
⊖ ⊖

▲

🔲 Air Conditioner...
Remote ▼

630

▭ Galaxy Home
(1FRB) ▼

640

🖥 TV (Samsung)

On ⏻

⊕ ⊕
VOL CH
⊖ ⊖

💡 Bulb

On ⏻

26 %

FIG. 13B

START

1410
ELECTRONIC
DEVICE LOCATED IN SPECIFIC
ROOM?

NO

↓YES

1420
UWB DEVICE
PRESENT IN SPECIFIC ROOM?

NO

↓YES

1430
FIRST-TYPE
UWB DEVICE PRESENT IN SPECIFIC
ROOM?

NO

1450
TRANSMIT, TO SECOND-TYPE UWB DEVICE,
FIRST CONTROL SIGNAL THAT ENABLES
SECOND-TYPE UWB DEVICE
TO OUTPUT UWB SIGNAL

YES

1440
SECOND-TYPE
UWB DEVICE PRESENT IN SPECIFIC
ROOM?

NO

↓YES

1460
TRANSMIT, TO FIRST-TYPE UWB DEVICE,
SECOND CONTROL SIGNAL TO ENABLE FIRST-TYPE
UWB DEVICE TO OUTPUT FIRST CONTROL
SIGNAL THAT ENABLES SECOND-TYPE
UWB DEVICE TO OUTPUT UWB SIGNAL

END

FIG. 14

START

SPECIFIC
APPLICATION BEING EXECUTED THROUGH
ELECTRONIC DEVICE? ⟋1510

NO

YES

UWB DEVICE PRESENT? ⟋1520

NO

YES

FIRST-TYPE UWB
DEVICE PRESENT? ⟋1530

NO

TRANSMIT, TO SECOND-TYPE UWB DEVICE,
FIRST CONTROL SIGNAL THAT ENABLES
SECOND-TYPE UWB DEVICE
TO OUTPUT UWB SIGNAL ⟋1550

YES

SECOND-TYPE
UWB DEVICE PRESENT? ⟋1540

NO

YES

TRANSMIT, TO FIRST-TYPE UWB DEVICE,
SECOND CONTROL SIGNAL TO ENABLE
FIRST-TYPE UWB DEVICE TO OUTPUT FIRST
CONTROL SIGNAL THAT ENABLES SECOND-TYPE
UWB DEVICE TO OUTPUT UWB SIGNAL ⟋1560

END

FIG. 15

FIG. 16

<div align="center">

**INTERNATIONAL SEARCH REPORT**

</div>

| International application No. |
| --- |
| **PCT/KR2022/012817** |

| A. | CLASSIFICATION OF SUBJECT MATTER |
| --- | --- |
| | **H04N 21/422**(2011.01)i; **H04N 21/4363**(2011.01)i; **H04N 21/436**(2011.01)i |

According to International Patent Classification (IPC) or to both national classification and IPC

| B. | FIELDS SEARCHED |
| --- | --- |

Minimum documentation searched (classification system followed by classification symbols)

H04N 21/422(2011.01); G06F 9/445(2006.01); H01Q 21/06(2006.01); H04W 12/06(2009.01); H04W 4/02(2009.01); H04W 76/00(2009.01); H04W 76/23(2018.01); H04W 88/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: UWB(ultra-wideband), 지향 각도(oriented angle), 거리(distance), 지향 시간 (oriented time), 사용자 인터페이스(user interface)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2020-0035788 A (SAMSUNG ELECTRONICS CO., LTD.) 06 April 2020 (2020-04-06)<br>See paragraphs [0009], [0017], [0020]-[0021] and [0221]-[0222]; and claims 1-3, 5, 7-9 and 11. | 1-15 |
| Y | KR 10-2021-0030785 A (SAMSUNG ELECTRONICS CO., LTD.) 18 March 2021 (2021-03-18)<br>See paragraphs [0048]-[0049], [0157] and [0213]. | 1-8,13-15 |
| Y | KR 10-2210139 B1 (BIZMODELINE CO., LTD.) 03 February 2021 (2021-02-03)<br>See paragraph [0061]; and claim 1. | 9-12 |
| A | KR 10-2016-0009946 A (LG ELECTRONICS INC.) 27 January 2016 (2016-01-27)<br>See paragraph [0008]. | 1-15 |
| A | KR 10-2021-0018389 A (SAMSUNG ELECTRONICS CO., LTD.) 17 February 2021 (2021-02-17)<br>See paragraph [0058]. | 1-15 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 November 2022** | **24 November 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | International application No.<br>**PCT/KR2022/012817** |
|---|---|---|

| Patent document<br>cited in search report | Publication date<br>(day/month/year) | Patent family member(s) | | | Publication date<br>(day/month/year) |
|---|---|---|---|---|---|
| KR 10-2020-0035788 A | 06 April 2020 | CN | 110958474 | A | 03 April 2020 |
| | | CN | 110958474 | B | 18 January 2022 |
| | | EP | 3629606 | A1 | 01 April 2020 |
| | | EP | 3629606 | B1 | 10 August 2022 |
| | | JP | 2022-500975 | A | 04 January 2022 |
| | | JP | 7118283 | B2 | 15 August 2022 |
| | | US | 11036451 | B2 | 15 June 2021 |
| | | US | 2020-0104087 | A1 | 02 April 2020 |
| | | WO | 2020-067771 | A1 | 02 April 2020 |
| KR 10-2021-0030785 A | 18 March 2021 | WO | 2021-049827 | A1 | 18 March 2021 |
| KR 10-2210139 B1 | 03 February 2021 | KR | 10-2016-0032641 | A | 24 March 2016 |
| KR 10-2016-0009946 A | 27 January 2016 | KR | 10-2016-0004164 | A | 12 January 2016 |
| | | KR | 10-2214118 | B1 | 09 February 2021 |
| | | US | 2017-0154326 | A1 | 01 June 2017 |
| | | US | 9904918 | B2 | 27 February 2018 |
| | | WO | 2016-003018 | A1 | 07 January 2016 |
| KR 10-2021-0018389 A | 17 February 2021 | EP | 2846568 | A1 | 11 March 2015 |
| | | EP | 2846568 | B1 | 31 March 2021 |
| | | EP | 3860178 | A1 | 04 August 2021 |
| | | KR | 10-2285072 | B1 | 03 August 2021 |
| | | US | 11134145 | B2 | 28 September 2021 |
| | | US | 2022-0014616 | A1 | 13 January 2022 |
| | | US | 9596561 | B2 | 14 March 2017 |

Form PCT/ISA/210 (patent family annex) (July 2022)